Europäisches Patentamt

European Patent Office    (11) Publication number: **0 011 474**

Office européen des brevets    **B1**

(19)

(12) **EUROPEAN PATENT SPECIFICATION**

(45) Date of publication of patent specification: 08.02.84    (51) Int. Cl.³: **C 09 J 3/14, C 08 L 51/06,** **C 08 F 255/02,** **C 08 F 255/06**

(21) Application number: 79302548.7

(22) Date of filing: 13.11.79

(54) Hot melt composition.

(30) Priority: 14.11.78 JP 139358/78

(43) Date of publication of application: 28.05.80 Bulletin 80/11

(45) Publication of the grant of the patent: 08.02.84 Bulletin 84/6

(84) Designated Contracting States: DE FR GB

(56) References cited: DE - A - 2 530 726 FR - A - 2 336 444 GB - A - 1 133 865

(73) Proprietor: MITSUI PETROCHEMICAL INDUSTRIES, LTD. 2-5, Kasumigaseki 3-chome Chiyoda-ku Tokyo 100 (JP)

(72) Inventor: Takeda, Masami 5-12-57, Shozoku-cho Iwakuni-shi, Yamaguchi-ken (JP) Inventor: Nagano, Riichiro 520, Waki Waki-cho-Kuga-gun, Yamaguchi-ken (JP)

(74) Representative: Spencer, Graham Easdale et al, A.A. Thornton & CO Northumberland House 303-306, High Holborn London WC1V 7LE (GB)

The file contains technical information submitted after the application was filed and not included in this specification

Courier Press, Leamington Spa, England.

# 0 011 474

## Hot melt composition

The present invention is concerned with hot melt compositions which are useful, for example, as adhesives.

Various types of adhesive are known, such as pressure-sensitive adhesives and hot melt adhesives. Pressure-sensitive adhesives, which typically comprise an elastomer (such as polyisoprene, styrene-butadiene rubber, butyl rubber, polyisobutylene, chloroprene rubber, poly-acrylic esters or polyvinyl ethers), a tackifier (such as resin or a derivative thereof, a terpene resin, a petroleum resin or coumarone-indene resin) and, optionally, additives such as softeners, fillers and stabilisers, are conventionally used to form adhesive tapes. The pressure sensitive adhesive is generally applied to the tape in the form of a solution in an organic solvent.

It is desirable to avoid the use of organic solvents in order to avoid environmental pollution and to improve the working environment. Hot melt adhesives can be applied to substrates without the use of solvents and they have therefore been used in increasing amounts to replace pressure-sensitive adhesives.

Some hot melt compositions are additionally pressure-sensitive, for example, styrene-isoprene-styrene block copolymer rubbers (SIS) and styrene-butadiene-styrene block copolymer rubbers (SBS). However, such block copolymer rubbers have low heat-resistance and weatherability; they are, moreover, expensive.

German Offenlegungsschrift 2,530,726 discloses a hot melt composition comprising a tackifier and an olefin polymer to which has been grafted a polar monomer, such as an unsaturated carboxylic acid or a derivative thereof. The olefin polymers disclosed in this Offenlegungsschrift are crystalline.

French Specification 2,336,444 discloses a hot melt adhesive composition comprising a crystalline olefin polymer to which has been grafted an unsaturated carboxylic anhydride or a derivative thereof, together with a hydrocarbon elastomer (such a composition is generally similar to that described above with reference to German Offenlegungsschrift 2,530,726, except that a hydrocarbon elastomer is used instead of a tackifier).

In both the German Offenlegungsschrift and the French specification mentioned, the olefin polymer used as the graft substrate is crystalline; there is no disclosure or suggestion of the use of any other type of olefin polymer. We have now found that improved hot melt compositions can be obtained by the use of certain olefin copolymer rubbers (which are, of course, amorphous) as graft substrate in compositions of the general type referred to in the above-mentioned French specification and German Offenlegungsschrift.

According to the invention, therefore, there is provided a hot melt composition, which comprises a tackifier, 0 to 50% of a softener and 30 to 70% of a polymer (the percentages being based on the combined weight of polymer plus tackifier) having a melt index at 230°C (measured according to ASTM—D—1238—65T) of 5 to 500, the polymer being formed by grafting an unsaturated carboxylic acid, or derivative thereof, to an ethylene-alpha olefin copolymer rubber containing 40 to 85 mole % of ethylene units, the resulting graft copolymer containing the grafted unsaturated carboxylic acid, or derivative thereof, in an amount of 0.01 to 10% by weight. If desired, the resulting graft copolymer may be partially esterified.

The hot melt compositions according to the invention have good tackiness, adhesion (peel strength) and holding power (shear adhesion), and they are easy to apply as coatings. They also have better heat resistance and ageing resistance than the above-mentioned SIS and SBS.

As mentioned above, the ethylene-alpha olefin copolymer rubbers used in the compositions according to the invention have a melt index of 5 to 500; if the melt index were to exceed 500, the adhesion and holding power of the composition would be impaired.

The hot-melt compositions according to the invention can be used as hot melt pressure-sensitive adhesives; if the melt index of the copolymers were to be lower than 5, the fluidity might be too low for this purpose, which would present difficulties in application and workability.

The melt index of the ethylene-alpha olefin copolymer rubbers used in the composition according to the invention is preferably 10 to 200, more preferably 20 to 100.

The ethylene-alpha olefin copolymer rubber used in the composition according to the invention is preferably substantially saturated when the composition according to the invention is to be used as a pressure-sensitive adhesive. Specifically, the amount of polyene such as diene and triene, if contained in the polymer chain, is preferably not more than 0.5 mole %. If a modified rubber is prepared from an ethylene series copolymer rubber rich in unsaturated bonds (such as commercially available ethylene-propylene-diene terpolymer rubber (EPDM), the resulting modified rubber generally has a high gel content and low fluidity even under high temperatures, resulting in difficulty in coating a support therewith.

The ethylene content of the ethylene $-\alpha$-olefin copolymer rubber is between 40 and 85 mole %, preferably, between 60 and 83 mole %. Materials suitable for use as the $\alpha$-olefin component of the copolymer rubber include, for example, propylene, 1-butene, and 4-methyl-1-pentene. Particularly preferred are propylene and 1-butene. The use of a crystalline ethylene $-\alpha$-olefin copolymer containing

more than 85 mole % of ethylene as the starting material for the modified copolymer may render the resultant composition unsatisfactory in tackiness, while if it contains less than 40% mole of ethylene, the composition may be unsatisfactory in holding power.

The unsaturated carboxylic acid used to modify the rubber may be, for example, acrylic acid, methacrylic acid, maleic acid, fumaric acid or itaconic acid. Derivatives of the carboxylic acids, such as anhydrides, esters, amides, imides and metal salts thereof can be used instead of the acid itself. Examples of such derivatives include, for example, maleic anhydride, citraconic anhydride, itaconic anhydride, methyl acrylate, methyl methacrylate, ethyl acrylate, ethyl methacrylate, butyl acrylate, butyl methacrylate, glycidyl acrylate, glycidyl methacrylate, monoethyl maleate, diethyl maleate, monoethyl fumarate, dimethyl fumarate, monomethyl itaconate, diethyl itaconate, acrylamide, methacrylamide, maleic acid monoamide, maleic acid diamide, maleic acid-N-monoethylamide, maleic acid-N, N-diethyl amide, maleic acid-N-monobutyl amide, maleic acid-N, N-dibutyl amide, fumaric acid monoamide, fumaric acid diamide, fumaric acid-N-monoethylamide, fumaric acid-N, N-diethylamide, fumaric acid-N-monobutyl amide, fumaric acid-N, N-dibutylamide, maleimide, N-butyl maleimide, N-phenyl maleimide, sodium acrylate, sodium methacrylate, potassium acrylate, and potassium methacrylate. Among these materials, an unsaturated dicarboxylic acid or an anhydride thereof is preferred; maleic anhydride is the preferred anhydride.

As mentioned above, the modified rubber may be partially esterified. The degree of esterification is preferably not more than 80 mole %, relative to the unsaturated carboxylic acid or the anhydride thereof. The alcohol used for the partial esterification may be, for example, an aliphatic, alicyclic or aromatic alcohol having 1 to 20 carbon atoms. Particularly suitable aliphatic alcohols are aliphatic monoalcohols such as methyl alcohol, ethyl alcohol, propanol, butanol, and ethylene glycol monoether, while cyclo-hexanol and benzyl alcohol are preferred examples of the alicyclic and aromatic alcohols, respectively.

The unsaturated carboxylic acid or derivative thereof can be grafted to the ethylene -$\alpha$-olefin copolymer rubber by known methods. For example, the grafting can be carried out by heating at a high temperature a mixture of the copolymer rubber and the graft monomer in the presence or absence of a solvent and a free-radical initiator. The amount (% by weight based on the copolymer rubber) of the monomer grafted to the copolymer rubber (hereinafter referred to as the rate of grafting) is chosen to be between 0.01 and 10% by weight, preferably, between 1 and 5% by weight. The copolymer rubber may be grafted partially or entirely. However, if the rate of grafting is less than 0.01% by weight, the resultant composition may have inferior tackiness and holding power, while if the rate of grafting exceeds 10% by weight, the composition may have low fluidity, so that it is difficult to coat a support with the composition. It follows that a rate of grafting exceeding 10% by weight is unsuitable when the composition according to the invention is to be a pressure-sensitive adhesive.

Materials suitable as the tackifier include, for example, petroleum resins (such as aromatic, aliphatic, alicyclic or copolymer type petroleum resins) terpene resins, rosin and derivatives thereof, and coumarone-indene resin. A petroleum resin is a resinous material obtained by polymerizing a mixture of unsaturated compounds obtained as by-product in cracking or refining petroleum. The resinous material may be hydrogenated or modified with acid for use in the composition according to the invention. The mixture of unsaturated compounds is preferably provided by a petroleum fraction having a boiling point ranging between −30°C and +50°C and consisting essentially of aliphatic hydrocarbons, or by a fraction having a boiling point ranging between 100 and 300°C and consisting essentially of aromatic hydrocarbons.

A preferred aliphatic petroleum resin has a softening point of 70 to 130°C, as determined by ring and ball method, a bromine number of 20 to 60 and an average molecular weight of 700 to 3,000 as determined by vapour pressure osmometry method. An aliphatic petroleum resin having these properties can be obtained by polymerizing olefins and diolefins in the $C_4$ and $C_5$ fractions containing unsaturated hydrocarbons which are obtained as by-product in cracking or refining petroleum. The polymerization is generally carried out at −15°C to +100°C in the presence of a Friedel-Craft catalyst. The unsaturated hydrocarbon mixture may contain alicyclic hydrocarbons.

A preferred aromatic petroleum resin has a softening point of 70 to 150°C as determined by ring and ball method and a bromine number of 5 to 70. The resin can be prepared by polymerizing a petroleum fraction rich in $C_9$ vinylaromatic compounds, which is obtained as by-product in cracking or refining petroleum in the presence of a Friedel-Craft catalyst.

When an alicyclic petroleum resin is used, it may be a polymer of cyclopentadiene, dicyclopentadiene, coumarone, indene, etc. or a polymer obtained by polymerizing a petroleum fraction rich in these alicyclic hydrocarbons. When a coumarone-indene resin is used in this invention, this is a polymer of coumarone and/or indene obtained by polymerizing a coumarone, indene or mixture thereof. The alicyclic petroleum resin or coumarone-indene resin preferably has a softening point of 50 to 150°C as determined by ring and ball method, a molecular weight of 500 to 3,000 as determined by vapour pressure osmometry method and a bromine number of 5 to 70.

When a copolymer type petroleum resin is used in this invention, it may be obtained by copolymerization reaction in the presence of a Friedel-Craft catalyst between a fraction rich in $C_4$ or $C_5$ aliphatic hydrocarbons and another fraction rich in $C_9$ vinylaromatic hydrocarbons.

Commercially available petroleum resins can be used as the tackifier, for example, the aliphatic petroleum resins available under the trade names Escorez (produced by Esso Chemical Co., Ltd.), Hirez (produced by Mitsui Petrochemical Industries, Ltd.), Quinton (produced by Nippon Zeon Co., Ltd.), or Wing Tack (produced by Goodyear Co., Ltd.), the aromatic petroleum resins available under the trade names Neopolymer (produced by Nippon Petrochemicals Co., Ltd.), Petrosin (produced by Mitsui Petrochemical Industries, Ltd.), or Klyrvel (produced by Velsicol Chemical Co., Ltd.). Other suitable commercially available petroleum resins include Toho Hiresin (trade name of a copolymer type petroleum resin produced by Toho Chemical Industrial, Co. Ltd.), Alcon (trade name of an alicyclic petroleum resin produced by Arakawa Chemical Industries, Ltd.) and Escoleg 5,000 series (trade name of alicyclic petroleum resins produced by Esso Chemical Co., Ltd.).

When the tackifier is a terpene resin, it may be a homopolymer or copolymer of terpenes such as pinene, terpinene and limonene. It is also possible to use a synthetic polyterpene resin obtained from a petroleum fraction. The terpene resin preferably has a softening point of 70 to 130°C as determined by ring and ball method, a molecular weight of 500 to 2,000 as determined by vapour pressure osmometry method and a bromine number of 5 to 70.

When the tackifier is a rosin or derivative thereof, it may be, for example, natural rosin, a rosin ester or rosin modified with a carboxylic acid.

Among the tackifiers described above, the terpene resins and aliphatic resins and aliphatic petroleum resins have particularly good pressure-sensitive properties and, thus, are preferred in this invention.

It is also possible to use as the tackifier a modified resin prepared by grafting an unsaturated carboxylic acid to a petroleum resin such as an aromatic, copolymer type or aliphatic petroleum resin. The modified resin enables the hot melt pressure-sensitive adhesive to be free from colour fading under high temperatures and to have improved pressure-sensitive properties.

The hot melt composition according to the invention preferably contains 40 to 60% by weight of the modified ethylene -$\alpha$-olefin copolymer rubber based on the total amount of the modified copolymer rubber and the tackifier. If the amount of the rubber does not fall within the range 30 to 70% (on the same basis), the hot melt composition has unsatisfactory adhesion.

Ethylene-vinylacetate copolymer and/or a wax can be added to the hot melt composition according to the invention, if desired, so as to provide a hot melt adhesive composition for bonding for example, shoe bottoms or woodwork.

The composition may contain additives such as softeners, antioxidants, ultraviolet absorbers and fillers, as used in conventional pressure-sensitive adhesives. A suitable softener, which serves to improve the flexibility and fluidity of the compound, may be, for example, petroleum fraction of high boiling point such as mineral oil, for example, paraffinic process oil, naphthenic process oil, aromatic process oil, liquid paraffin, white oil and petrolatum as well as vegetable oils such as castor oil, cotton seed oil, linseed oil and rape seed oil. A mineral oil, particularly naphthenic process oil is compatible with the elastomer component of the composition and thus is preferred. The amount of softener is preferably not more than 50% by weight based on the combined weight of the elastomer component and the tackifier (if too much softener is used, the hot melt composition may have unsatisfactory adhesion and holding power).

Suitable antioxidants include, for example, phenolic compounds and sulphur-containing compounds; suitable ultraviolet absorbers include, for example, salicylic acid derivatives, benzophenones, and benzotriazoles; and suitable fillers include, for example, calcium carbonate, glass beads, cracked stone, zinc white, carbon black and silica.

The hot melt composition according to the invention can be prepared by melting and kneading in a kiln a mixture of the necessary components described above. A nozzle or roll coating machine can be used to apply the hot melt composition as a coating.

In order that the present invention may be more fully understood, the following Examples are given by way of illustration only. Throughout the Examples, the properties of the hot melt compositions were determined by the methods indicated below

1. Tackiness: Rolling ball method (J. Dow method)
2. Adhesion: 180° peeling method (JIS Z—1523)
3. Holding power: The produced adhesive film was stuck to a stainless steel plate designated in JIS with 1 kg load applied to the film the sticking area being 15 × 25 mm, and the distance of the film displacement was measured two hours later.

## Example 1

10 kg of ethylene-propylene copolymer rubber containing 80.5 mole % of ethylene units and having a melt index of 28, hereinafter referred to as "EPR—1", 300 g of maleic anhydride powder of less than 60 mesh, and 14.3 g of an organic peroxide, i.e., 2,5-dimethyl-2, 5-di(tert-butyl-peroxy) hexyne-3, were uniformly mixed under nitrogen atmosphere. The mixture was extruded at a resin temperature of 250°C using an extruder having a diameter of 40 mm and equipped with a dulmage screw so as to obtain pelletized extrudate. The length to diameter ratio (L/D) of the extruder was 28. The extrudate was washed with acetone so as to remove unreacted monomers, thereby obtaining maleic anhydride-modified ethylene-propylene copolymer rubber having a melt index of 8.5 and containing 2.5% by weight of maleic anhydride units, hereinafter referred to as "MAH—EPR—1".

Then, a hot melt pressure-sensitive adhesive composition was prepared by kneading for 2 hours at 150 to 170°C a mixture consisting of 100 parts by weight of MAH—EPR—1, 100 parts by weight of "YS Resin P—1000", (trade name of terpene resin produced by Yasuhara Fat and Oil Co., Ltd.), 50 parts by weight of "Sun Oil 410" (trade name of naphthenic process oil produced by Sun Oil Co., Ltd., U.S.A.) and 2 parts by weight of 2,6-di-tert-butyl-p-cresol (an antioxidant). The composition was melted at 180°C and applied to biaxially oriented polyethylene terephthalate film disposed on a hot plate of 180°C, the coating layer being 40 $\mu$ thick, so as to prepare an adhesive film. The properties of the adhesive film are shown in the following Table 1.

### Example 2

Maleic anhydride-modified ethylene-propylene copolymer rubber having a melt index of 16 and containing 1.8% by weight of maleic anhydride units, hereinafter referred to as "MAH—EPR—2", was prepared as in Example 1, except that the amount of maleic anhydride used was 220 g. Then, an adhesive film was prepared as in Example 1, except that MAH—EPR—2 mentioned above was used as the elastomer component. The properties of the adhesive film are shown in the following Table 1.

### Example 3

A reaction vessel charged in advance with one litre of p-xylene was charged with 200 g of ethylene-propylene copolymer rubber having a melt index of 16 and containing 80 mole % of ethylene units, followed by purging the reaction vessel with nitrogen and, subsequently, heating to 140°C so as to dissolve the copolymer rubber completely in the p-xylene. Then, 24.5 g of maleic anhydride and 1.35 g of dicumylperoxide dissolved in p-xylene were separately dripped into the reaction vessel over a period of 4 hours. The reaction system was kept stirred for a further 2 hours, followed by cooling the reaction mixture to room temperature. Then, the reaction mixture was poured into acetone so as to precipitate the polymer formed by the reaction, followed by washing the polymer with acetone so as to obtain a purified polymer of crumb-like appearance.

The resulting polymer was maleic anhydride-modified ethylene-propylene copolymer rubber having a melt index of 7 and containing 3.2% by weight of maleic anhydride units, hereinafter referred to as "MAH—EPR—3".

Finally, an adhesive film was prepared as in Example 1, except that MAH—EPR—3 was used as the elastomer component. The properties of the adhesive film are shown in the following Table 1.

### Control 1

An adhesive film was prepared as in Example 1, except that EPR—1, which was not modified, was used in place of the modified copolymer rubber of MAH—EPR—1 used in Example 1. The properties of the adhesive film are shown in the following Table 1.

### Control 2

An adhesive film was prepared as in Example 1, except that Kraton TR—1107, (trade name of SIS produced by Shell Chemical Co., Ltd.) was used in place of MAH—EPR—1 used in Example 1. The properties of the adhesive film are shown in the following Table 1.

TABLE 1

|  | Elastomer | Tackiness (the number of balls) | Adhesion (g/25 mm) | Holding power (mm/2 hrs) |
|---|---|---|---|---|
| Example 1 | MAH—EPR—1 | 12 | 1500 | 0.1 |
| „ 2 | MAH—EPR—2 | 11 | 2300 | 0.1 |
| „ 3 | MAH—EPR—3 | 10 | 2000 | 0.1 |
| Control 1 | EPR—1 | 3 | 1800 | 0.4 |
| „ 2 | SIS | 12 | 2100 | 0.2 |

### Example 4

An adhesive film was prepared as in Example 1, except that the pressure-sensitive adhesive composition did not contain the naphthenic process oil. The properties of the adhesive film are shown in the following Table 2.

## Example 5

An adhesive film was prepared as in Example 1, except that Hirez T—100X (trade name of aliphatic petroleum resin produced by Mitsui Petrochemical Industries, Ltd.) was used as tackifier in place of the terpene resin used in Example 1. The properties of the adhesive film are shown in Table 2.

## Example 6

An adhesive film was prepared as in Example 4, except that the amount of the terpene resin as tackifier was 60 parts by weight instead of 100 parts by weight. The properties of the adhesive film are shown in Table 2.

## Control 3

An adhesive film was prepared as in Example 4, except that the amount of the terpene resin was 30 parts by weight. The properties of the adhesive film are shown in Table 2.

## Control 4

An adhesive film was prepared as in Example 4, except that the amount of MAH—EPR—1 was 30 parts by weight instead of 100 parts by weight. The properties of the adhesive film are shown in Table 2.

TABLE 2

|  |  | Example 4 | Example 5 | Example 6 | Control 3 | Control 4 |
|---|---|---|---|---|---|---|
| Component (parts by weight) | MAH—EPR—1 | 100 | 100 | 100 | 100 | 30 |
|  | Terpene resin | 100 | — | 60 | 30 | 100 |
|  | Hirez T—100X | — | 100 | — | — | — |
|  | Softener | — | 50 | — | — | — |
|  | Antioxidant | 2 | 2 | 2 | 2 | 2 |
| Properties | Tackiness (the number of balls) | 8 | 10 | 10 | 6 | 8 |
|  | Adhesion (g/25 mm) | 2000 | 1800 | 1300 | 250 | 1000 |
|  | Holding power (mm/2 hours) | 0.1 | 0.1 | 0.2 | >1.0 | 0.6 |

## Examples 7 to 9

Ethylene-propylene copolymer rubber having a melt index of 16 and containing 80 mole % ethylene units was reacted as in Example 3 with acrylic acid, methacrylic acid and methyl methacrylate, respectively. The properties of the resulting modified rubbers are shown in Table 3.

Then, adhesive compositions were prepared by kneading for 2 hours at 150 to 170°C, respective mixtures consisting of 100 parts by weight of each modified rubber, 100 parts by weight of YS resin P—1000 (trade name of terpene resin produced by Yasuhara Fat and Oil Co., Ltd.), 80 parts by weight of Sun Oil 410 (trade name of naphthenic process oil produced by Sun Oil Co., Ltd. U.S.A.), and 2 parts by weight of 2,6-di-tert-butyl-p-cresol (an antioxidant). The composition was melted at 180°C and biaxially oriented polyethylene terephthalate film disposed on a hot plate of 180°C was coated therewith, the coating layer being 40 μ thick, so as to obtain an adhesive film. The properties of the adhesive film are shown in Table 3.

TABLE 3

| | Elastomer | Modifier | Elastomer component properties | | Adhesive film properties | | |
| --- | --- | --- | --- | --- | --- | --- | --- |
| | | | rate of grafting (Wt. %) | M.I. | Tackiness (the number of balls) | Adhesion (g/25 mm) | Holding power (mm/2 hrs.) |
| Example 7 | A—EPR (1) | acrylic acid | 6.4 | 7.0 | 5 | 1720 | 0.1 |
| „ 8 | MTA—EPR (2) | methacrylic acid | 7.2 | 7.1 | 5 | 1290 | 0.1 |
| „ 9 | MMA—EPR (3) | methyl methacrylate | 1.3 | 6.6 | 5 | 1540 | 0.2 |

Note:
(1) acrylic acid-modified ethylene-propylene copolymer rubber
(2) methacrylic acid-modified ethylene-propylene copolymer rubber
(3) methyl methacrylate-modified ethylene-propylene copolymer rubber

Example 10

Reaction mixture 1 containing maleic anhydride-modified ethylene-propylene copolymer rubber was prepared as in Example 3 except that ethylene-propylene copolymer rubber having a melt index of 45 and containing 80 mole % of ethylene units was used as the starting rubber. 50 ml of reaction mixture 1 was taken aside and the rest thereof was partially esterified with n-butanol. Specifically, a mixture consisting of 100 ml of reaction mixture 1 and 100 ml of n-butanol was kept stirred for 15 hours at 130°C for the esterification reaction so as to obtain reaction mixture 2.

Each of reaction mixture 1 and reaction mixture 2 was cooled to a room temperature and, then, poured into acetone so as to precipitate the formed polymer, followed by washing the polymer with acetone. The product obtained from reaction mixture 1 was maleic anhydride modified ethylene-propylene copolymer rubber containing 3.0% by weight of maleic anhydride units, while the modified rubber obtained from reaction mixture 2 was found to have a degree of esterification of 30 mole % and a melt index of 33 g/10 minutes.

Finally, an adhesive film was prepared as in Example 1 except that the partially esterified modified rubber obtained from reaction mixture 2 was used as the elastomer component. The adhesive film was found to have a tackiness of 8 (the number of balls), an adhesion of 1,300 g/25 mm and a holding power of 0.1 mm/2 hrs.

Example 11

Maleic anhydride-modified ethylene-butene-1 copolymer rubber having a melt index of 10 and containing 2.5% by weight of maleic anhydride units was prepared as in Example 3 except that ethylene-butene-1 copolymer rubber having a melt index of 30 and containing 80 mole % of ethylene units was used as the starting rubber. Then, an adhesive film was prepared as in Example 1 except that the modified rubber mentioned above was used as the elastomer component. The adhesive film was found to have a tackiness of 12 (the number of balls), an adhesion of 1,500 g/25 mm, and a holding power of 0.1 mm/2 hrs.

Example 12

Maleic anhydride-modified ethylene-propylene copolymer rubber having a melt index of 0.21 and containing 2.5% by weight of maleic anhydride units was prepared by reacting ethylene-propylene copolymer rubber having a melt index of 16 and containing 80 mole % of ethylene units with maleic anhydride as in Example 3 except that kerosene was used as the solvent and the amount of maleic anhydride was 32.9 g. Then, an adhesive film was prepared as in Example 1 except that the modified rubber mentioned above was used as the elastomer component. The adhesive film was found to have a tackiness of 7 (the number of balls), an adhesion of 1,520 g/25 mm and a holding power of 0.1 mm/2 hrs.

Control 5

A reaction vessel having an internal volume of one litre was charged with 400 g of ethylene-propylene copolymer rubber containing 60 mole % of ethylene units and having a number average molecular weight of 3,000 (melt index not less than 1,000), followed by purging the reaction vessel with nitrogen and subsequently heating the rubber to 160°C. Then, 10 g of maleic anhydride and 1.0 g of di-tert-butyl peroxide were separately dripped into the reaction vessel over a period of 4 hours. The

7

# O O11 474

mixture was kept stirred for a further 2 hours and, then, the reaction vessel was gradually evacuated to 10 mmHg, which was maintained for 2 hours, so as to remove volatiles (such as unreacted maleic anhydride and the substances generated by decomposition of the peroxide). The product thus obtained was maleic anhydride-modified ethylene-propylene copolymer rubber containing 2.1% by weight of maleic anhydride units and having a melt index of not less than 1,000.

An adhesive composition was prepared as in Example 1 except that the modified rubber thus obtained was used as the elastomer component. Further, a biaxially oriented polyethylene terephthalate film was coated with the adhesive composition as in Example 1 except that the coating was carried out at room temperature. It was impossible to measure the tackiness and adhesion of the resultant adhesive film, indicating that the tackiness and adhesion were less than 2, (number of balls) and less than 20 g/25 mm, respectively. It was also impossible to measure the holding power of the adhesive film because the film had dropped less than 2 hours later from the stainless steel plate having the film stuck thereto.

Heat resistance test

Several hot melt compositions were prepared as in Example 1 except that each of the elastomers shown in Table 4 was used in place of MAH—EPR—1 used in Example 1. When Table 4 indicates that a composition was heat-treated, this was carried out as follows: 50 g of the composition, housed in a stainless steel beaker having an internal volume of 100 ml, was heated for 6 hours in an air oven maintained at 230°C, followed by cooling to 180°C. Each composition was applied to a biaxially oriented polyethylene terephthalate film disposed on a hot plate of 180°C, the coating layer being 40 $\mu$ thick, so as to prepare an adhesive film. The properties of the resulting adhesive films are shown in Table 4.

## TABLE 4

| Elastomer | Heat Treatment | Tackiness (the number of balls) | Adhesion (g/25 mm) | Holding power (mm/2 hrs.) |
|---|---|---|---|---|
| SIS* | none | 12 | 2100 | 0.2 |
| MAH—EPR—2** | none | 11 | 2300 | 0.1 |
| MAH—EPR—4*** | none | 6 | 930 | 0.1 |
| SIS* | treated | not more than 2 | 2060 | dropped before 2 hrs. |
| MAH—EPR—2** | treated | 5 | 2420 | 0.1 |
| MAH—EPR—4*** | treated | 5 | 1440 | 0.1 |

*Kraton TR—1107 (see Control 2)
**See Example 2
***MAH—EPR—4 ... Maleic anhydride-modified ethylene-propylene copolymer rubber having a melt index of 23 and containing 2.5% by weight of maleic anhydride units, which was prepared by modifying as in Example 3 an ethylene-propylene copolymer rubber containing 80.5 mol % ethylene units and having a melt index of 34.

## Claims

1. A hot melt composition, which comprises a tackifier, an optional softener, and an ethylene-alpha olefin copolymer to which has been grafted an unsaturated carboxylic acid, or a derivative of said acid, the amount of the softener and the grafted copolymer in the composition being 0 to 50% and 30 to 70%, respectively, based on the weight of the grafted copolymer plus the tackifier, characterised in that the ethylene-alpha olefin copolymer is a rubber containing 40 to 85 mole % of ethylene units and having a melt index at 230°C, measured according to ASTM—D—1238—65T, of 5 to 500, and in that the graft copolymer contains the grafted unsaturated carboxylic acid, or derivative thereof, in an amount of 0.01 to 10% by weight.

2. A hot melt composition according to claim 1, characterised in that the alpha olefin is propylene, but-1-ene, or 4-methyl-pent-1-ene.

3. A hot melt composition according to claim 1 or 2, characterised in that the ethylene-alpha olefin copolymer rubber contains units derived from a polyene, in an amount not exceeding 0.5 mole %.

4. A hot melt composition according to any of claims 1 to 3, characterised in that the grafted copolymer is partially esterified.

8

**0 011 474**

5. A hot melt composition according to claim 4, characterised in that the degree of esterification does not exceed 80 mole %.

6. A hot melt composition according to any of claims 1 to 5, characterised in that the unsaturated carboxylic acid, or derivative thereof, is acrylic acid, methacrylic acid, maleic acid, fumaric acid, itaconic acid or maleic anhydride.

7. A hot melt composition according to any of claims 1 to 6, characterised in that the tackifier is a petroleum resin, a terpene resin, a rosin or a rosin derivative, or a coumarone-indene resin.

8. A hot melt composition according to claim 7, characterised in that the petroleum resin is prepared by polymerising a mixture of unsaturated aliphatic hydrocarbons boiling in the range −30°C to +50°C or by polymerising a mixture of unsaturated aromatic hydrocarbons boiling in the range 100 to 300°C, or an acid-modified or hydrogenated derivative of such a polymerised mixture.

9. A hot melt composition according to any of claims 1 to 8, characterised in that it further contains an ethylene-vinyl acetate copolymer and/or a wax.

**Revendications**

1. Composition thermofusible qui comprend un agent rendant collant, éventuellement un plastifiant, et un copolymère éthylène alpha oléfine sur lequel a été greffé un acide carboxylique insaturé, ou un dérivé de cet acide, la quantité du plastifiant et de copolymère greffé dans la composition étant de 0 à 50% et de 30 à 70%, respectivement, rapportée au poids du copolymère greffé plus l'agent rendant collant, caractérisée par le fait que le copolymère éthylène-alpha oléfine est un caoutchouc contenant 40 à 85% en mole d'unités éthylène et ayant un indice d'écoulement à l'état fondu à 230°C, mesuré selon la norme ASTM—D—1238—65T, de 5 à 500, et par le fait que le copolymère greffé contient l'acide carboxylique insaturé greffé, ou son dérivé, en une quantité comprise entre 0,01 et 10% en poids.

2. Composition thermofusible selon la revendication 1, caractérisée par le fait que l'alpha-oléfine est le propylène, le but-1-ène ou le 4-méthyl-pent-1-ène.

3. Composition thermofusible selon les revendications 1 ou 2, caractérisée par le fait que le caoutchouc de copolymère éthylène-alpha-oléfine contient des unités provenant d'un polyène en une quantité né dépassant pas 0,5% en mole.

4. Composition thermofusible selon l'une quelconque des revendications 1 à 3, caractérisée par le fait que le copolymère greffé est partiellement estérifié.

5. Composition thermofusible selon la revendication 4, caractérisée par le fait que le degré d'esterification ne dépasse pas 80% en mole.

6. Composition thermofusible selon l'une quelconque des revendications 1 à 5, caractérisée par le fait que l'acide carboxylique insaturé, ou son dérivé, est l'acide acrylique, l'acide méthacrylique, l'acide maléique, l'acide fumarique, l'acide itaconique ou l'anhydride maléique.

7. Composition thermofusible selon l'une quelconque des revendications 1 à 6, caractérisée par le fait que l'agent donnant du collant est une résine de pétrole, une résine terpénique, la colophane ou un dérivé de la colophane ou une résine de coumarone-indène.

8. Composition thermofusible selon la revendication 7, caractérisée par le fait que la résine de pétrole est préparée par polymérisation d'un mélange d'hydrocarbures aliphatiques insaturés bouillant entre −30°C et +50°C ou par polymérisation d'un mélange d'hydrocarbures aromatiques insaturés bouillant entre 100 et 300°C, ou bien d'un dérivé à modification acide ou hydrogéné de ce mélange polymérisé.

9. Composition thermofusible selon l'une quelconque des revendications 1 à 8, caractérisée par le fait qu'elle contient en plus un copolymère éthylène-acétate de vinyle et/ou cire.

**Patentansprüche**

1. Heißschmelzzusammensetzung, die einen Klebrigmacher, gegebenenfalls einen Weichmacher und ein Ethylen-alpha-Olefin-Copolymer, auf das eine ungesättigte Carbonsäure oder ein Derivat dieser Säure gepfropft ist, enthält, wobei die Menge an Weichmacher und an Pfropfcopolymer in der Zusammensetzung 0—50% bzw 30—70% beträgt, bezogen auf das Gewicht des gepfropften Copolymers plus des Klebrigmachers, dadurch gekennzeichnet, daß das Ethylen-alpha-Olefin-Copolymer ein Kautschuk ist mit 40—85 Mol-% Ethylen-Einheiten und einem Schmelz-index bei 230°C von 5—500, gemessen nach ASTM—D—1238—65T und daß das Pfropfcopolymer die aufgepfropfte ungesättigte Carbonsäure oder das Derivat davon in einer Menge von 0,01—10 Gew.-% enthält.

2. Heißschmelzzusammensetzung nach Anspruch 1, dadurch gekennzeichnet, daß das alpha-Olefin Propylen, But-1-en oder 4-Methyl-pent-1-en ist.

3. Heißschmelzzusammensetzung nach Anspruch 1 oder 2, dadurch gekennzeichnet, daß der copolymere Ethylen-alpha-Olefin-Kautschuk nicht mehr als 0,5 Mol-% von einem Polyen abstammende Einheiten enthält.

4. Heißschmelzzusammensetzung nach einem der Ansprüche 1—3, dadurch gekennzeichnet, daß das aufgepfropfte Copolymer teilweise verestert ist.

9

5. Heißschmelzzusammensetzung nach Anspruch 4, dadurch gekennzeichnet, daß der Veresterungsgrad nicht mehr als 80 Mol-% beträgt.

6. Heißschmelzzusammensetzung nach einem der Ansprüche 1—5, dadurch gekennzeichnet, daß die ungesättigte Carbonsäure oder das Derivat davon Alcrylsäure, Methacrylsäure, Maleinsäure, Fumarsäure, Itaconsäure oder Maleinsäureanhydrid ist.

7. Heißschmelzzusammensetzung nach einem der Ansprüche 1—6, dadurch gekennzeichnet, daß der Klebrigmacher ein Petrolharz, ein Terpenharz, Kolophonium oder ein Kolophoniumderivat, oder ein Coumaron-Inden-Harz ist.

8. Heißschmelzzusammensetzung nach Anspruch 7, dadurch gekennzeichnet, daß das Petrolharz hergestellt wird durch Polymerisation einer Mischung ungesättigter aliphatischer Kohlenwasserstoffe, die zwischen —30°C und +50°C siedet, oder durch Polylmerisation einer Mischung ungesättigter aromatischer Kohlenwasserstoffe, die zwischen 100 und 300°C siedet, oder eines säuremodifizierten oder hydrierten Derivats einer solchen polymerisierten Mischung.

9. Heißschmelzzusammensetzung nach einem der Ansprüche 1—8, dadurch gekennzeichnet, daß sie weiterhin ein Ethylen-Vinyl-Acetat-Copolymer und/oder ein Wachs enthält.